# EUROPEAN PATENT APPLICATION

(11) **EP 4 545 962 A1**
(43) Date of publication of application: **30.04.2025**
(21) Application number: 23831003.1
(22) Date of filing: 07.06.2023
(51) Int. Cl.: G01N 33/18

(54) **WATER DETECTING DEVICE, WATER DETECTING SYSTEM, AND WATER DETECTING METHOD**

(30) Priority: 27.06.2022 JP 2022102903
(71) Applicant: EBARA CORPORATION, Ota-ku, Tokyo 144-8510 (JP)
(72) Inventor: SUGIYAMA Kazuhiko, Tokyo 144-8510 (JP); YAMADA Yasumasa, Tokyo 144-8510 (JP); SEKIGUCHI Takashi, Tokyo 144-8510 (JP); SAKAMAKI Yuta, Tokyo 144-8510 (JP); PARK Hyunwoo, Tokyo 144-8510 (JP)
(74) Representative: Schmidbauer, Andreas Konrad
(86) International application number: PCT/JP2023/021150
(87) International publication number: WO 2024/004553

(57) **Abstract**

A water detecting device that detects a water generation situation present on a surface of an object, which is installed in a surrounding environment and through which water flows, includes: an object temperature and humidity sensor configured to detect a temperature and a humidity of the object; an environment temperature and humidity sensor configured to detect a temperature and a humidity of the surrounding environment; and a determination unit configured to determine presence or absence of water generation and a factor of water generation based on object temperature and humidity information indicating changes over time in the temperature and humidity detected by the object temperature and humidity sensor and environment temperature and humidity information indicating changes over time in the temperature and humidity detected by the environment temperature and humidity sensor.

## Description

### Technical Field

The present invention relates to a water detecting device, a water detecting system, and a water detecting method.

Priority is claimed on Japanese Patent Application No. 2022-102903, filed June 27, 2022, the content of which is incorporated herein by reference.

### Background Art

Conventionally, by providing a temperature and humidity sensor in a device, whether or not water is generated due to condensation is determined based on a temperature and a humidity detected by the temperature and humidity sensor (for example, see Patent Documents 1 and 2).

### Citation List

### Patent Documents

Patent Document 1: Japanese Unexamined Patent Application, First Publication No. 2015-017853
Patent Document 2: Japanese Unexamined Patent Application, First Publication No. 2015-059691

### Summary of Invention

### Problem to be Solved by the Invention

In devices described in Patent Documents 1 and 2, for situations where water is being generated, it is possible to detect whether or not the water generation exists. However, it is not possible to detect a cause of the water generation.

In view of the above-described problems, an object of the present invention is to provide a water detecting device, a water detecting system, and a water detecting method capable of detecting not only the presence or absence of water generation, but also a cause of water generation.

### Means to Solve the Problem

In order to achieve the above object, according to an aspect of the present invention, a water detecting device that detects a water generation situation present on a surface of an object, installed in a surrounding environment and through which water flows, the device includes: an object temperature and humidity sensor that detects a temperature and a humidity of the object, an environment temperature and humidity sensor that detects a temperature and a humidity of the surrounding environment, and a determination unit that determines presence or absence of water generation and a factor of water generation based on object temperature and humidity information indicating changes over time in the temperature and humidity detected by the object temperature and humidity sensor, and environment temperature and humidity information indicating changes over time in the temperature and humidity detected by the environment temperature and humidity sensor.

### Effects of the Invention

With the water detecting device according to the present invention, the water detecting device includes the object temperature and humidity sensor, the environment temperature and humidity sensor, and the determination unit, and the determination unit determines the presence or absence of water generation and the factor of water generation based on the object temperature and humidity information indicating the changes over time in the temperature and humidity detected by the object temperature and humidity sensor and the environment temperature and humidity information indicating the changes over time in the temperature and humidity detected by the environment temperature and humidity sensor. As a result, not only is it possible to detect the presence or absence of water generation but also the cause of water generation.

Problems, configurations, and effects other than those above described are made clear embodiments for implementing the invention, which are described later on.

### Brief Description of Drawings

[FIG. 1] An overall configuration diagram showing an example of a water detecting system according to a first embodiment.
[FIG. 2] A schematic configuration diagram showing an example of a water detecting device according to the first embodiment.
[FIG. 3] A block diagram showing an example of the water detecting device according to the first embodiment.
[FIG. 4] A hardware configuration diagram showing an example of a computer constituting each device.
[FIG. 5] A flowchart showing an example of an operation of the water detecting device according to the first embodiment.
[FIG. 6] A graph showing an example of changes over time in an object temperature and humidity sensor and an environment temperature and humidity sensor.
[FIG. 7] An overall configuration diagram showing an example of a water detecting system according to a second embodiment.
[FIG. 8] A block diagram showing an example of an object monitoring device and a management device according to the second embodiment.
[FIG. 9] An overall configuration diagram showing an example of a water detecting system according to a third embodiment.
[FIG. 10] A schematic configuration diagram showing an example of a water detecting device according to the third embodiment.
[FIG. 11] A block diagram showing an example of the water detecting device according to the third embodiment.
[FIG. 12] A flowchart showing an example of an operation of the water detecting device according to the third embodiment.
[FIG. 13] A flowchart showing an example of the operation of the water detecting device according to the third embodiment (continuation of FIG. 12).
[FIG. 14] A flowchart showing an example of a first water determination process by the water detecting device according to the third embodiment.
[FIG. 15] A graph showing an example of changes over time in the object temperature and humidity sensor depending on presence or absence of water generation.
[FIG. 16] A flowchart showing an example of a second water determination process by the water detecting device according to the third embodiment.
[FIG. 17] A graph showing an example of changes over time in the object temperature and humidity sensor depending on the presence or absence of water generation.
[FIG. 18] A graph showing an example of changes over time in the object temperature and humidity sensor and the environment temperature and humidity sensor when condensation water due to an object is generated.
[FIG. 19] A graph showing an example of changes over time in the object temperature and humidity sensor and the environment temperature and humidity sensor when condensation water due to a surrounding environment is generated.
[FIG. 20] A graph showing an example of changes over time in the object temperature and humidity sensor and the environment temperature and humidity sensor when water leakage due to the object has occurred.
[FIG. 21] An overall configuration diagram showing an example of a water detecting system according to a fourth embodiment.
[FIG. 22] A block diagram showing an example of an object monitoring device and a management device according to the fourth embodiment.

### Description of Embodiments

Hereinafter, embodiments of the present invention are described with reference to the drawings. Hereinafter, a scope required to achieve an object of the present invention is schematically shown, and required explanations of the required scope are mainly described herein.

### (First Embodiment)

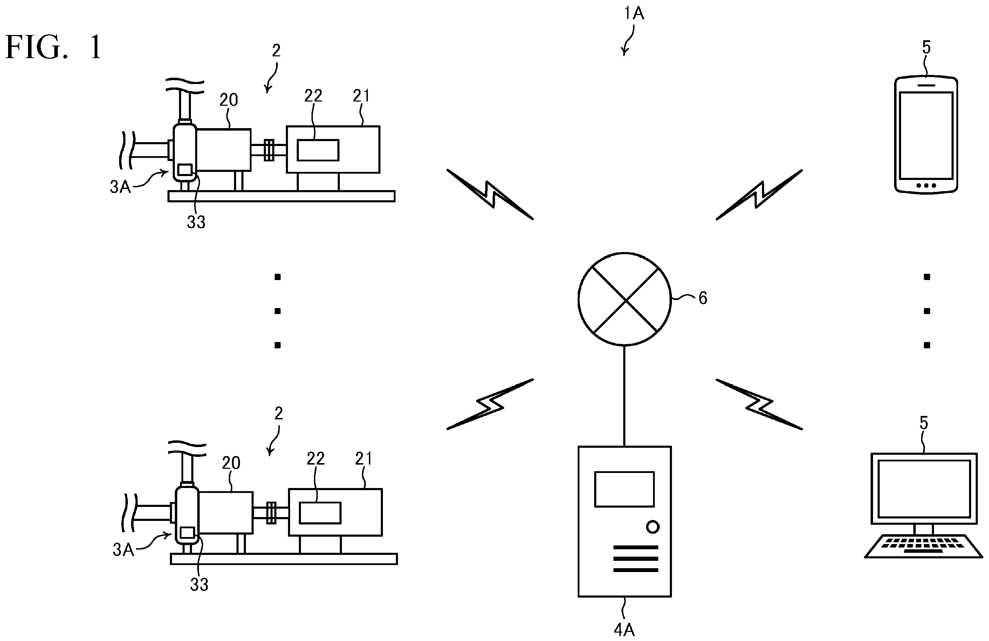

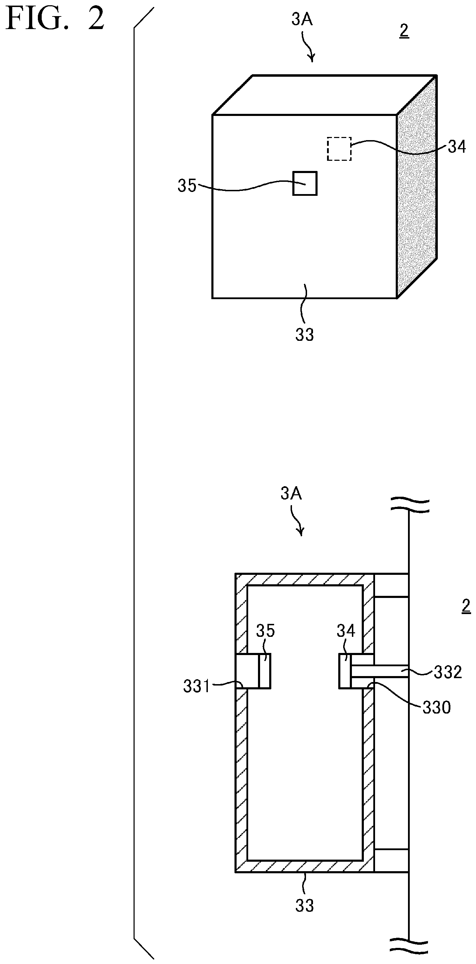

FIG. 1 is an overall configuration diagram showing an example of a water detecting system 1A according to a first embodiment. FIG. 2 is a schematic configuration diagram showing an example of a water detecting device 3A according to the first embodiment.

The water detecting system 1A functions as a system that detects a water generation situation present on a surface of an object installed in a surrounding environment, and notifies a user (an owner, a manager, a worker for inspection and repair or the like of the object) of a detection result.

The object is any device or equipment through which water (tap water, sewage water, fresh water, seawater, industrial water, or the like) flows, with examples thereof including a pump device, piping, or the like used in an infrastructure facility (water supply, sewage disposal, or the like) or a plant facility (oil refining, power generation, manufacturing, chemical processes, or the like). In the present embodiment, explanation centers around a case where the object is a pump device 2 that transfers water.

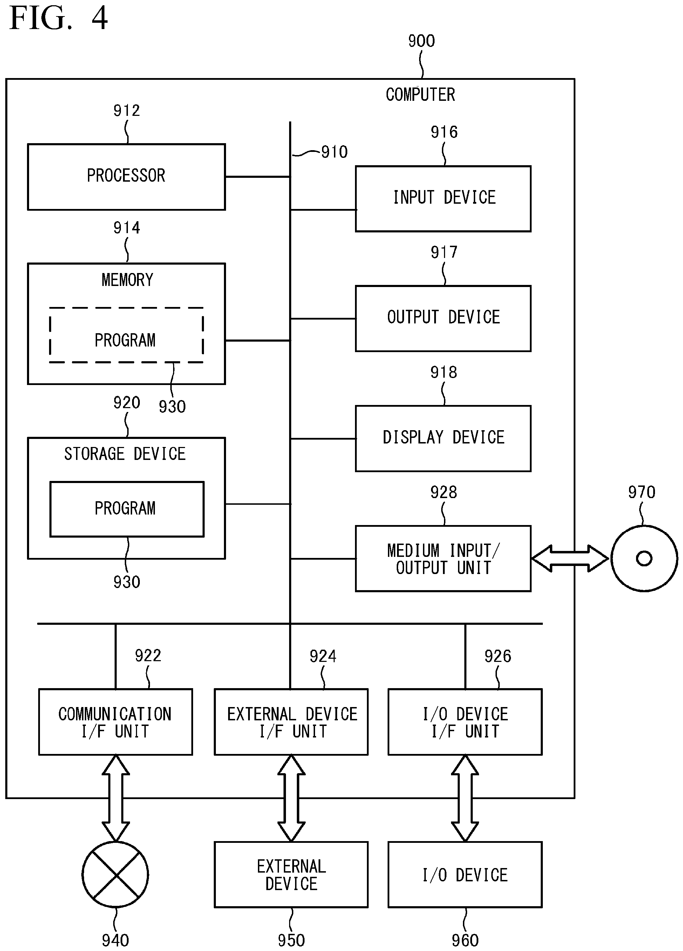

Specifically, a configuration of the water detecting system 1A includes the pump device 2 as an example of the object, the water detecting device 3A attached to the pump device 2, a management device 4A that manages an installation status and an operation status of the pump device 2, the detection result or the like by the water detecting device 3A, and a user terminal device 5 that is used by the user. Each of the devices 2 to 5 is configured as, for example, a general-purpose or dedicated computer (see FIG. 4 described later), and is configured to be able to transmit and receive various types of data to and from each other via a network 6. The water detecting system 1A includes one or a plurality of water detecting devices 3A, and one water detecting device 3A may be attached to one object, or a plurality of water detecting devices 3A may be attached to different locations on one object. The number of each of the devices 2 to 5 and the configuration of the network 6 are not limited to the example of FIG. 1.

The pump device 2 includes a pump unit 20, a motor 21 that serves as a drive source for the pump device 2, and a pump control panel 22 that controls an operation of the pump device 2. The pump unit 20 is constituted by, for example, an impeller, a rotary shaft, a bearing, a mechanical seal, a gland packing, a casing, piping or the like. The pump control panel 22 controls a rotational operation of the motor 21 and controls a communication operation when transmitting and receiving various types of information to and from the management device 4A, based on set values to which operating conditions are set by the user, and detection values of sensors (not shown) provided in each part of the pump unit 20 and the motor 21.

The water detecting device 3A is disposed, for example, below the mechanical seal of the pump unit 20, and detects a generation situation of water present on a surface of the casing of the pump unit 20. As shown in FIG. 2, the water detecting device 3A includes a housing 33, an object temperature and a humidity sensor 34 that detects a temperature and a humidity of the object (in the present embodiment, the pump device 2), and an environment temperature and a humidity sensor 35 that detects a temperature and a humidity of a surrounding environment in which the object (in the present embodiment, the pump device 2) is installed. The surrounding environment may be outdoors or may be indoors.

The housing 33 internally stores the object temperature and humidity sensor 34 and the environment temperature and humidity sensor 35, and includes opening portions 330 and 331 formed in the object temperature and humidity sensor 34 and the environment temperature and humidity sensor 35, respectively. The housing 33 has, for example, a rectangular parallelepiped shape, and it is preferable that the opening portions 330 and 331 are formed on a surface having the largest area. The shape of the housing 33 and a position and a size of the opening portions 330 and 331 may be changed as appropriate.

The object temperature and humidity sensor 34 is disposed on a side of the housing 33 facing the object, and for example, a water absorbing material 332 is disposed between the pump device 2 and the object temperature and humidity sensor 34. The environment temperature and humidity sensor 35 is disposed on a side of the housing 33 opposite to the object. The object temperature and humidity sensor 34 and the environment temperature and humidity sensor 35 are sensors capable of detecting a temperature and a humidity, and any detection method may be used. The object temperature and humidity sensor 34 and the environment temperature and humidity sensor 35 detect at least one or both of a relative humidity and an absolute humidity, and in a case where any one of the relative humidity and the absolute humidity is detected, the other of the relative humidity and the absolute humidity may be calculated based on one of the relative humidity and the absolute humidity and the temperature. A material and a shape of the water absorbing material 332 may be appropriately changed, and the water absorbing material 332 may be omitted according to an installation status of the water detecting device 3A and the like.

The management device 4A is configured as, for example, a server type computer or a cloud type computer. The management device 4A collects various types of information from the pump device 2 and the water detecting device 3A and registers the collected information in a database. In addition, when the information collected from the pump device 2 and the water detecting device 3A satisfies a predetermined notification condition, the management device 4A transmits notification information to the user terminal device 5, and when a request for information provision is received from the user terminal device 5, the management device 4A transmits the information registered in the database to the user terminal device 5 as provision information.

The user terminal device 5 is configured as, for example, a stationary computer or a portable computer that is used by the user. The user terminal device 5 has a program installed, such as an application or a browser, receives various input operations, and outputs various types of information (notification information, provision information, and the like) via a display screen or audio output.

The network 6 is configured using wired communication or wireless communication, or a combination of wired communication and wireless communication according to any communication standard. Specifically, for example, in a standardized communication network such as the internet, it is possible to use a communication network managed within a building such as a local network, or a combination of these communication networks. In addition, international standards are typically used as communication standards for wireless communication. As means of the international standards of communication, methods such as IEEE802.15.4, IEEE802.15.1, IEEE802.15.11a, 11b, 11g, 11n, 11ac, 11ad, ISO/IEC14513-3-10, and IEEE802.15.4g exist. In addition, it is possible to use methods such as Bluetooth (registered trademark), Bluetooth Low Energy, Wi-Fi, ZigBee (registered trademark), Sub-GHz, EnOcean (registered trademark), and LTE.

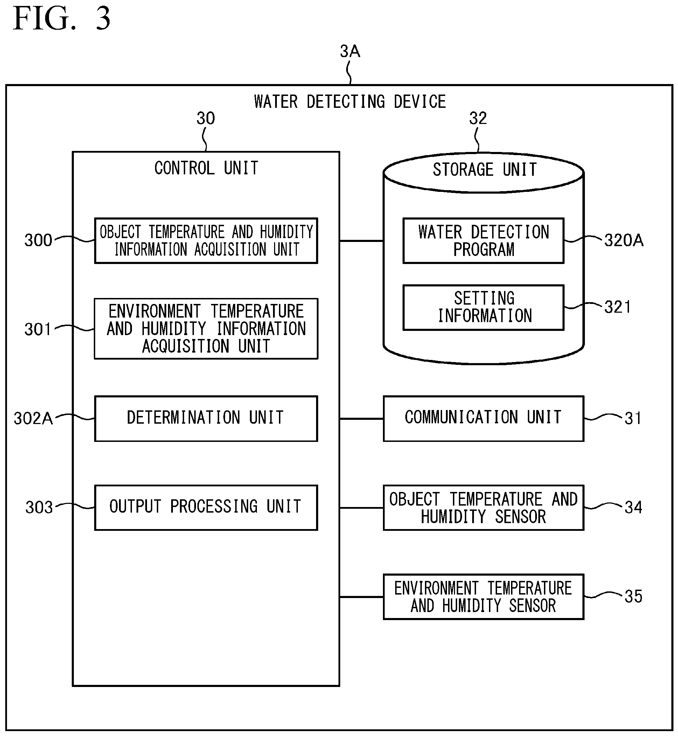

FIG. 3 is a block diagram showing an example of the water detecting device 3A according to the first embodiment. The water detecting device 3A includes, as main components thereof, a control unit 30, a communication unit 31, and a storage unit 32, in addition to the housing 33, the object temperature and humidity sensor 34, and the environment temperature and humidity sensor 35.

The control unit 30 functions as an object temperature and humidity information acquisition unit 300, an environment temperature and humidity information acquisition unit 301, a determination unit 302A, and an output processing unit 303 by executing, for example, a water detection program 320A stored in the storage unit 32. The communication unit 31 is connected to the network 6 and functions as a communication interface that transmits and receives various data to and from, for example, the pump device 2, the management device 4A, or the user terminal device 5. The storage unit 32 stores various programs (the water detection program 320A and the like) and data (setting information 321 or the like) used in an operation of the water detecting device 3A. For example, the setting information 321 stores parameters (various thresholds, cycles, and the like) referred to by the control unit 30 when the water detecting device 3A operates, and is configured to be set via, for example, the management device 4A or the user terminal device 5.

The object temperature and humidity information acquisition unit 300 acquires object temperature and humidity information indicating changes over time in the temperature and humidity of the pump device 2 by receiving the temperature and humidity of the pump device 2 detected by the object temperature and humidity sensor 34 at a predetermined detection cycle.

The environment temperature and humidity information acquisition unit 301 acquires environment temperature and humidity information indicating changes over time in the temperature and humidity of the surrounding environment by receiving the temperature and humidity of the surrounding environment detected by the environment temperature and humidity sensor 35 at a predetermined detection cycle.

The determination unit 302A determines the presence or absence of water generation and a factor of water generation on the surface of the pump device 2 based on the object temperature and humidity information indicating the changes over time in the temperature and humidity of the pump device 2 detected by the object temperature and humidity sensor 34 and the environment temperature and humidity information indicating the changes over time in the temperature and humidity of the surrounding environment detected by the environment temperature and humidity sensor 35.

Specifically, the determination unit 302A performs a water determination process of determining the presence or absence of water generation on the surface of the pump device 2 based on the object temperature and humidity information, a condensation determination process of determining presence or absence of condensation water generation due to the surrounding environment based on the environment temperature and humidity information, and a water generation factor process of determining, when it is determined through the water determination process that water is generated on the surface of the pump device 2, whether the factor of water generation is condensation water caused by the pump device 2 or condensation water caused by the surrounding environment based on a determination result obtained by determining the presence or absence of condensation water generation through the condensation determination process. Specific contents of each process are described later.

The output processing unit 303 outputs the determination results indicating the presence or absence of water generation and the factor of generation determined by the determination unit 302A. An output destination of the determination result may be the storage unit 32, or may be notified to the user by being output as notification information to the pump device 2, the management device 4A, or the user terminal device 5.

FIG. 4 is a hardware configuration diagram showing an example of a computer 900 constituting each device.

Each of the pump device 2, the water detecting device 3A, the management device 4A, and the user terminal device 5 is configured by the general-purpose or dedicated computer 900. As shown in FIG. 4, the computer 900 includes, as main components thereof, a bus 910, a processor 912, a memory 914, an input device 916, an output device 917, a display device 918, a storage device 920, a communication interface (I/F) unit 922, an external device I/F unit 924, an input/output (I/O) device I/F unit 926, and a medium input/output unit 928. The above-described components may be omitted as appropriate depending on the application for which the computer 900 is used.

The processor 912 is configured as one or a plurality of arithmetic processing devices (CPU (central processing units), MPU (micro-processing units), DSP (digital signal processors), GPU (graphics processing unit), or the like) and operates as a control unit that oversees the entire computer 900. The memory 914 stores various data and a program 930, and is configured as, for example, a volatile memory (a DRAM, an SRAM, or the like) functioning as a main memory, a non-volatile memory (ROM), or a flash memory.

The input device 916 is configured as, for example, a keyboard, a mouse, a numeric keypad, or an electronic pen, and functions as an input unit. The output device 917 is configured as, for example, an audio (voice) output device, or a vibration device, and functions as an output unit. The display device 918 is configured as, for example, a liquid crystal display, an organic EL display, an electronic paper, or a projector, and functions as an output unit. The input device 916 and the display device 918 may be integrated into one device, such as a touch panel display. The storage device 920 is configured as, for example, an HDD, or an SSD, and functions as a storage unit. The storage device 920 stores various data required for executing an operating system or the program 930.

The communication I/F unit 922 is connected to a network 940 (which may be the same as the network 6 in FIG. 1) such as the internet or an intranet in a wired or wireless manner, and functions as a communication unit that transmits and receives data to and from another computer according to a predetermined communication standard. The external device I/F unit 924 is connected to an external device 950 such as a camera, a printer, a scanner, or a reader/writer in a wired or wireless manner, and functions as a communication unit that transmits and receives data to and from the external device 950 according to a predetermined communication standard. The I/O device I/F unit 926 is connected to an I/O device 960 such as various sensors and actuators, and functions as a communication unit that transmits and receives various signals and data, such as a detection signal from a sensor and a control signal for an actuator, to and from the I/O device 960. The medium input/output unit 928 is configured as, for example, a drive device such as a DVD (digital versatile disc) drive or a CD (compact disc) drive, a memory card slot, or a USB connector, and reads and writes data from and to a medium (non-transitory storage medium) 970 such as a DVD, a CD, a memory card, and a USB memory.

In the computer 900 having the above configuration, the processor 912 loads the program 930 stored in the storage device 920 into the memory 914, executes the program 930, and controls each unit of the computer 900 via the bus 910. The program 930 may be stored in the memory 914 instead of the storage device 920. The program 930 may be recorded on the medium 970 in an installable file format or an executable file format and may be provided to the computer 900 via the medium input/output unit 928. The program 930 may be provided to the computer 900 by being downloaded via the communication I/F unit 922 through the network 940. In addition, the computer 900 may implement various functions that are implemented by the processor 912 executing the program 930 using hardware such as an FPGA (field-programmable gate array) or an ASIC (application specific integrated circuit).

For example, the computer 900 is configured as a stationary computer or a portable computer, and is any form of electronic device. The computer 900 may be a client type computer, a server type computer, or may be a cloud type computer.

### (Water Detecting Method)

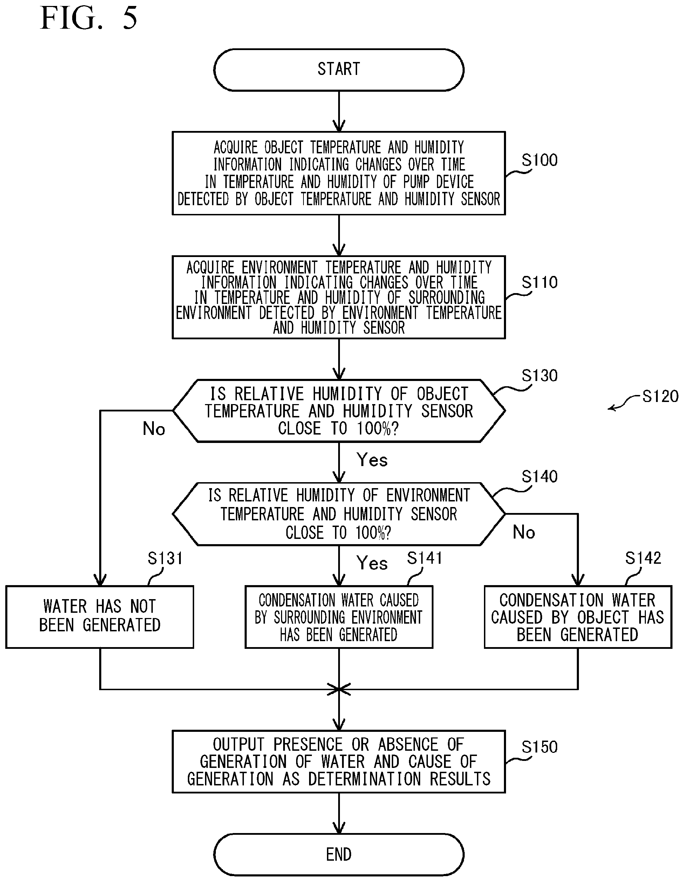

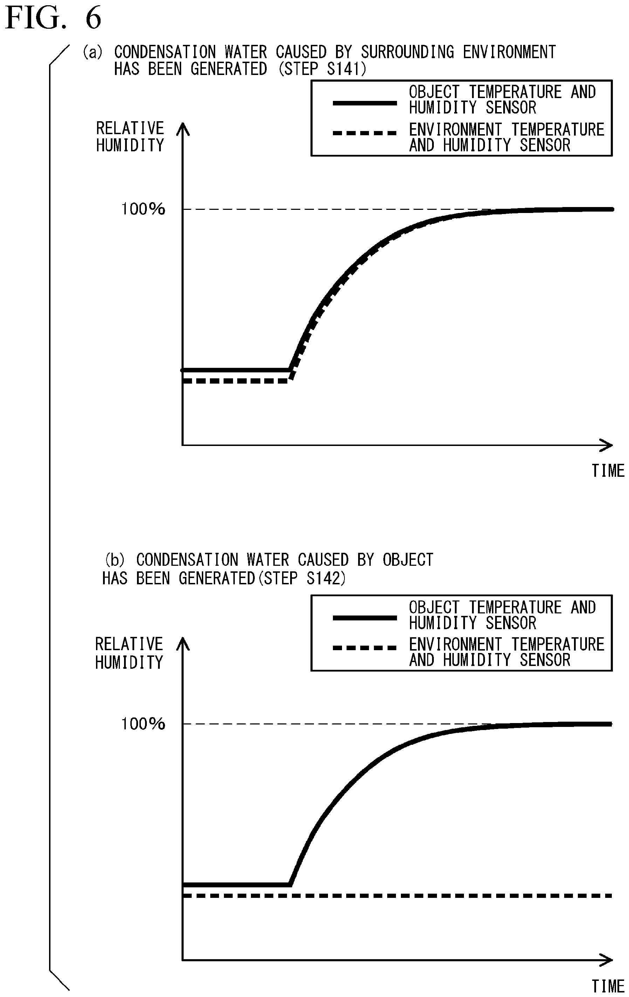

FIG. 5 is a flowchart showing an example of the operation of the water detecting device 3A according to the first embodiment. FIG. 6 is a graph showing an example of changes over time in the object temperature and humidity sensor 34 and the environment temperature and humidity sensor 35. A series of processes shown in FIG. 5 may be repeatedly executed at, for example, a predetermined execution cycle, or may be executed based on an execution command from the pump device 2, the management device 4A, or the user terminal device 5.

First, in step S100, the object temperature and humidity information acquisition unit 300 of the water detecting device 3A acquires the object temperature and humidity information indicating the changes over time in the temperature and humidity of the pump device 2, by receiving the temperature and humidity of the pump device 2 detected by the object temperature and humidity sensor 34 at a predetermined detection cycle.

Next, in step S110, the environment temperature and humidity information acquisition unit 301 acquires the environment temperature and humidity information indicating the changes over time in the temperature and humidity of the surrounding environment by receiving the temperature and humidity of the surrounding environment detected by the environment temperature and humidity sensor 35, at a predetermined detection cycle.

Then, in step S120 (specifically, steps S130 to S142), the determination unit 302A determines the presence or absence of water generation and the factor of water generation on the surface of the pump device 2 based on the object temperature and humidity information acquired in step S100 and the environment temperature and humidity information acquired in step S110.

First, in step S130, the determination unit 302A performs the water determination process of determining the presence or absence of water generation on the surface of the pump device 2 based on the object temperature and humidity information. Specifically, it is determined whether or not a relative humidity of the pump device 2 based on the object temperature and humidity information is close to 100%, and in a case where the relative humidity is close to 100%, it is determined that water is generated. In this case, in a case where the relative humidity of the pump device 2 exceeds a predetermined threshold (for example, 95%), it is considered that the relative humidity is close to 100%, and it may be determined that water is generated. In addition, in a case where a duration time during which the relative humidity of the pump device 2 exceeds a predetermined threshold (for example, 90%) exceeds a predetermined time threshold, it is considered that the relative humidity is close to 100%, and it may be determined that water is generated.

Next, when the determination unit 302A determines through the water determination process in step S130 that water is generated (that is, when "Yes" is determined in step S 130), the determination unit 302A performs the condensation determination process of determining the presence or absence of condensation water generation due to the surrounding environment based on the environment temperature and humidity information in step S140. Specifically, it is determined whether or not a relative humidity of the surrounding environment based on the environment temperature and humidity information is close to 100%, and in a case where the relative humidity is close to 100%, it is determined that condensation water is generated. In this case, in a case where the relative humidity of the surrounding environment exceeds a predetermined threshold (for example, 95%), it is considered that the relative humidity is close to 100%, and it may be determined that condensation water is generated. In addition, in a case where a duration time when the relative humidity of the surrounding environment exceeds a predetermined threshold (for example, 90%) exceeds a predetermined time threshold, it is considered that the relative humidity is close to 100%, and it may be determined that condensation water is generated.

Then, the determination unit 302A performs the water generation factor process based on a determination result in step S140. That is, when it is determined through the condensation determination process in step S140 that condensation water due to the surrounding environment is generated (that is, when "Yes" is determined in step S140), it is considered that the situation is as shown in (a) of FIG. 6, and it is determined in step S141 that the factor of water generation on the surface of the pump device 2 is condensation water caused by the surrounding environment. On the other hand, when the determination unit 302A determines through the condensation determination process in step S140 that condensation water due to the surrounding environment is not generated (that is, when "No" is determined in step S140), it is considered that the situation is as shown in (b) of FIG. 6, and it is determined in step S142 that the factor of water generation on the surface of the pump device 2 is condensation water caused by the pump device 2.

In addition, when the determination unit 302A determines through the water determination process in step S130 that water is not generated (that is, when "No" is determined in step S130), the determination unit 302A determines in step S131 that water is not generated.

Then, in step S150, the output processing unit 303 outputs a determination result (specifically, determination results of steps S131, S141, and S142) by the determination unit 302A in step S120, and the series of processes is ended. It should be noted that step S100 corresponds to an object temperature and humidity information acquisition step, step S110 corresponds to an environment temperature and humidity information acquisition step, step S120 corresponds to a determination step, and step S150 corresponds to an output processing step.

As described above, with the water detecting device 3A according to the present embodiment, it is possible to determine the presence or absence of generation and the factor of water generation on the surface of the object (pump device 2) by combining the object temperature and humidity information indicating the changes over time in the temperature and humidity of the pump device 2 with the environment temperature and humidity information indicating the changes over time in the temperature and humidity of the surrounding environment.

### (Second Embodiment)

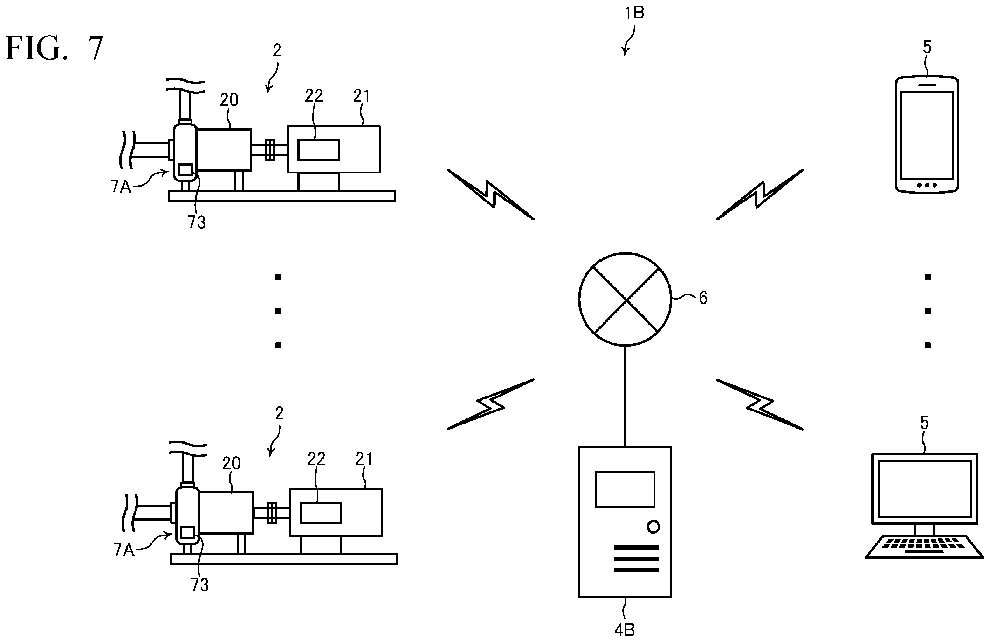

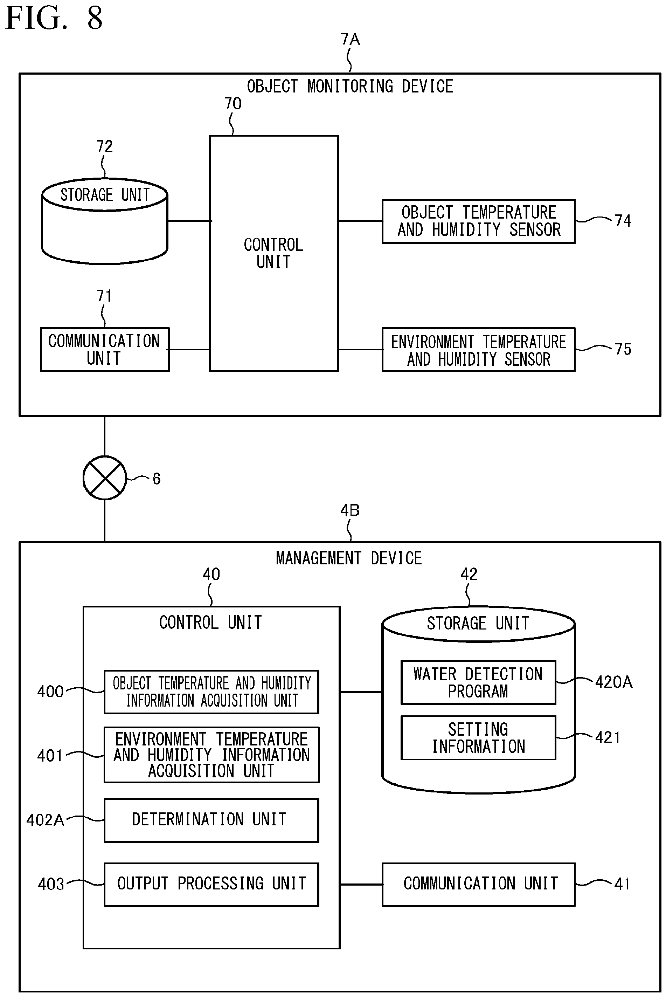

FIG. 7 is an overall configuration diagram showing an example of a water detecting system 1B according to a second embodiment. FIG. 8 is a block diagram showing an example of an object monitoring device 7A and a management device 4B according to the second embodiment.

The water detecting system 1B according to the present embodiment is different from the first embodiment in that the water detecting system 1B includes the object monitoring device 7A attached to the pump device 2 instead of the water detecting device 3A, and the management device 4B implements functions of the water detecting method performed by the control unit 30 of the water detecting device 3A. A basic configuration and operation are common to the first embodiment. The water detecting system 1B includes one or a plurality of object monitoring devices 7A, and one object monitoring device 7A may be attached to one object, or a plurality of object monitoring devices 7A may be attached to different locations of one object. Hereinafter, feature parts of the present embodiment are mainly described.

The object monitoring device 7A is a device in which the object temperature and humidity information acquisition unit 300, the environment temperature and humidity information acquisition unit 301, the determination unit 302A, and the output processing unit 303 are omitted from the water detecting device 3A according to the first embodiment. That is, the object monitoring device 7A includes a control unit 70, a communication unit 71, a storage unit 72, a housing 73, an object temperature and humidity sensor 74, and an environment temperature and humidity sensor 75. The control unit 70, the communication unit 71, and the storage unit 72 may be omitted as appropriate. In that case, the object temperature and humidity sensor 74 and the environment temperature and humidity sensor 75 may be connected to, for example, the pump control panel 22 of the pump device 2.

The object temperature and humidity sensor 74 and the environment temperature and humidity sensor 75 transmit sensor data to the management device 4B at a predetermined transmission cycle through the control unit 70 and the communication unit 71. The transmission cycle of the sensor data may be the same as the detection cycle of the object temperature and humidity sensor 74 and the environment temperature and humidity sensor 75. Alternatively, the transmission cycle of the sensor data may be longer than the detection cycle of the object temperature and humidity sensor 74 and the environment temperature and humidity sensor 75. In that case, the object temperature and humidity sensor 74 and the environment temperature and humidity sensor 75 may collectively transmit the sensor data accumulated during the transmission cycle.

The management device 4B includes, as main components thereof, a control unit 40, a communication unit 41, and a storage unit 42. The control unit 40 functions as an object temperature and humidity information acquisition unit 400, an environment temperature and humidity information acquisition unit 401, a determination unit 402A, and an output processing unit 403 by executing, for example, a water detection program 420A stored in the storage unit 42. Since the object temperature and humidity information acquisition unit 400, the environment temperature and humidity information acquisition unit 401, the determination unit 402A, and the output processing unit 403 function in the same manner as the object temperature and humidity information acquisition unit 300, the environment temperature and humidity information acquisition unit 301, the determination unit 302A, and the output processing unit 303 according to the first embodiment, detailed descriptions thereof are omitted.

As described above, with the management device 4B according to the present embodiment, it is possible to determine the presence or absence of water generation and the factor of water generation on the surface of the object (pump device 2), by combining the object temperature and humidity information indicating the changes over time in the temperature and humidity of the pump device 2 with the environment temperature and humidity information indicating the changes over time in the temperature and humidity of the surrounding environment.

### (Third Embodiment)

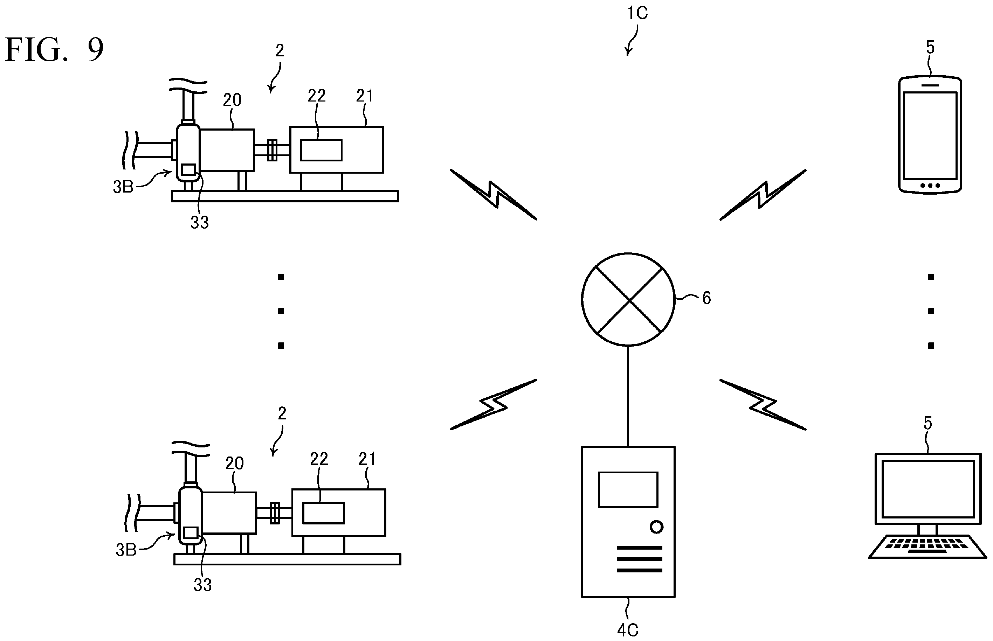

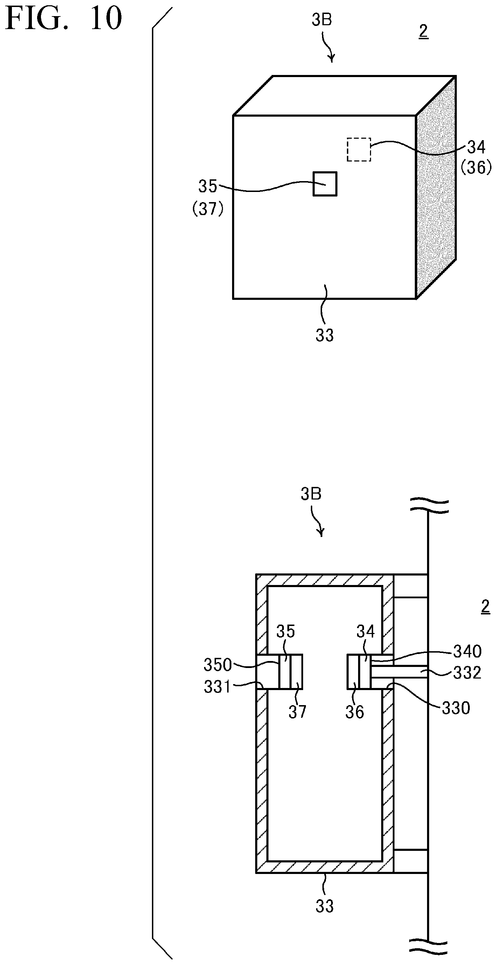

FIG. 9 is an overall configuration diagram showing an example of a water detecting system 1C according to a third embodiment. FIG. 10 is a schematic configuration diagram showing an example of a water detecting device 3B according to the third embodiment.

The water detecting system 1C according to the present embodiment is different from the first embodiment in that the water detecting device 3B further includes an object temperature and humidity sensor heater 36 disposed close to the object temperature and humidity sensor 34 and an environment temperature and humidity sensor heater 37 disposed close to the environment temperature and humidity sensor 35. A basic configuration and operation are common to the first embodiment. Hereinafter, feature parts of the present embodiment are mainly described.

The object temperature and humidity sensor heater 36 is disposed to be able to heat at least one of a sensing portion 340 of the object temperature and humidity sensor 34 and the surface of the pump device 2 as the object. The environment temperature and humidity sensor heater 37 is disposed to be able to heat a sensing portion 350 of the environment temperature and humidity sensor 35.

In the present embodiment, as shown in FIG. 10, the object temperature and humidity sensor heater 36 and the environment temperature and humidity sensor heater 37 are disposed on back sides of the sensing portions 340 and 350, respectively, and heat the sensing portions 340 and 350 in a planar manner. The object temperature and humidity sensor heater 36 and the environment temperature and humidity sensor heater 37 are switched between and ON and OFF operations of a heating state based on, for example, a timer circuit or heating control by the control unit 30. For example, the object temperature and humidity sensor heater 36 and the environment temperature and humidity sensor heater 37 repeatedly perform the ON and OFF operations of being turned ON for a predetermined ON period (for example, 20 seconds) by being switched from OFF to ON and then being turned OFF for a predetermined OFF period (for example, 380 seconds) by being switched from ON to OFF, at a predetermined time interval (for example, at an interval of 400 seconds). The ON and OFF operations of the object temperature and humidity sensor heater 36 and the environment temperature and humidity sensor heater 37 may be performed synchronously or asynchronously.

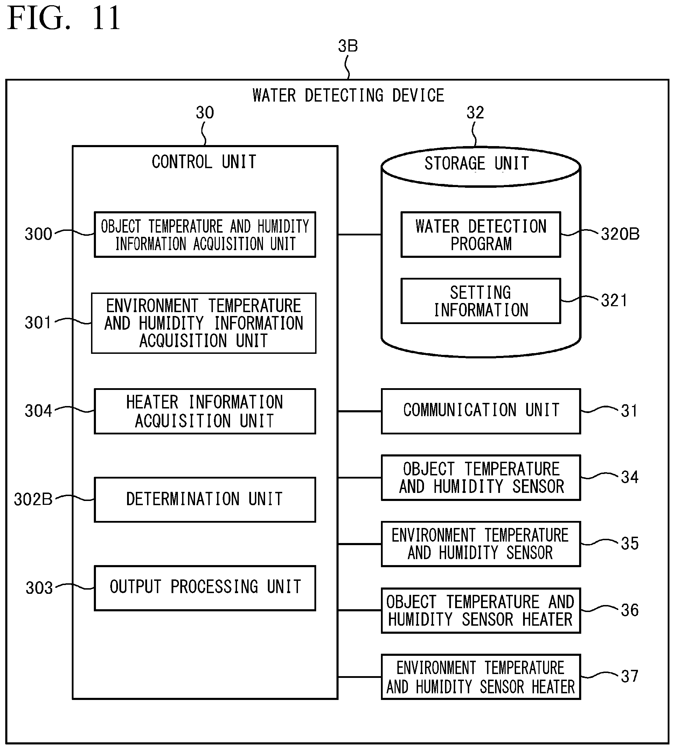

FIG. 11 is a block diagram showing an example of the water detecting device 3B according to the third embodiment. The water detecting device 3B includes, as main components thereof, in addition to the housing 33, the object temperature and humidity sensor 34, the environment temperature and humidity sensor 35, the object temperature and humidity sensor heater 36, and the environment temperature and humidity sensor heater 37, the control unit 30, the communication unit 31, and the storage unit 32, similarly to the water detecting device 3A according to the first embodiment.

The control unit 30 functions as the object temperature and humidity information acquisition unit 300, the environment temperature and humidity information acquisition unit 301, a heater information acquisition unit 304, a determination unit 302B, and the output processing unit 303 by executing, for example, a water detection program 320B stored in the storage unit 32. Since the object temperature and humidity information acquisition unit 300, the environment temperature and humidity information acquisition unit 301, and the output processing unit 303 function in the same manner as the object temperature and humidity information acquisition unit 300, the environment temperature and humidity information acquisition unit 301, and the output processing unit 303 according to the first embodiment, detailed descriptions thereof are omitted.

The heater information acquisition unit 304 acquires heater information indicating changes over time in heating states of the object temperature and humidity sensor heater 36 and the environment temperature and humidity sensor heater 37. The heater information includes a time at which the ON and OFF operations of the object temperature and humidity sensor heater 36 and the environment temperature and humidity sensor heater 37 are switched. For example, the heater information is acquired by a timer circuit, operation command data by the control unit 30, and a detection value of a current sensor provided in the object temperature and humidity sensor heater 36 and the environment temperature and humidity sensor heater 37.

The determination unit 302B determines the presence or absence of water generation and the factor of water generation on the surface of the pump device 2 based on the object temperature and humidity information indicating the changes over time in the temperature and humidity of the pump device 2 detected by the object temperature and humidity sensor 34, the environment temperature and humidity information indicating the changes over time in the temperature and humidity of the surrounding environment detected by the environment temperature and humidity sensor 35, and the heater information indicating the changes over time in the heating states of the object temperature and humidity sensor heater 36 and the environment temperature and humidity sensor heater 37.

Specifically, the determination unit 302B performs a water determination process of determining the presence or absence of water generation on the surface of the pump device 2 based on the object temperature and humidity information and the heater information, a first condensation determination process of determining presence or absence of condensation water generation due to the pump device 2 based on the object temperature and humidity information, the environment temperature and humidity information, and the heater information, a second condensation determination process of determining presence or absence of condensation water generation due to the surrounding environment based on the object temperature and humidity information, the environment temperature and humidity information, and the heater information, and a water generation factor process of determining, when it is determined through the water determination process that water is generated on the surface of the pump device 2, whether the factor of water generation is water leakage caused by the pump device 2, condensation water caused by the pump device 2, or condensation water caused by the surrounding environment based on a determination result obtained by determining the presence or absence of condensation water generation through the first condensation determination process, and a determination result obtained by determining the presence or absence of condensation water generation through the second condensation determination process. In this case, the determination unit 302B calculates a dew point of the surrounding environment from the temperature and humidity of the surrounding environment indicated by the environment temperature and humidity information, and uses the calculated dew point in each of first and second condensation determination processes. Specific contents of each process are described later.

### (Water Detecting Method)

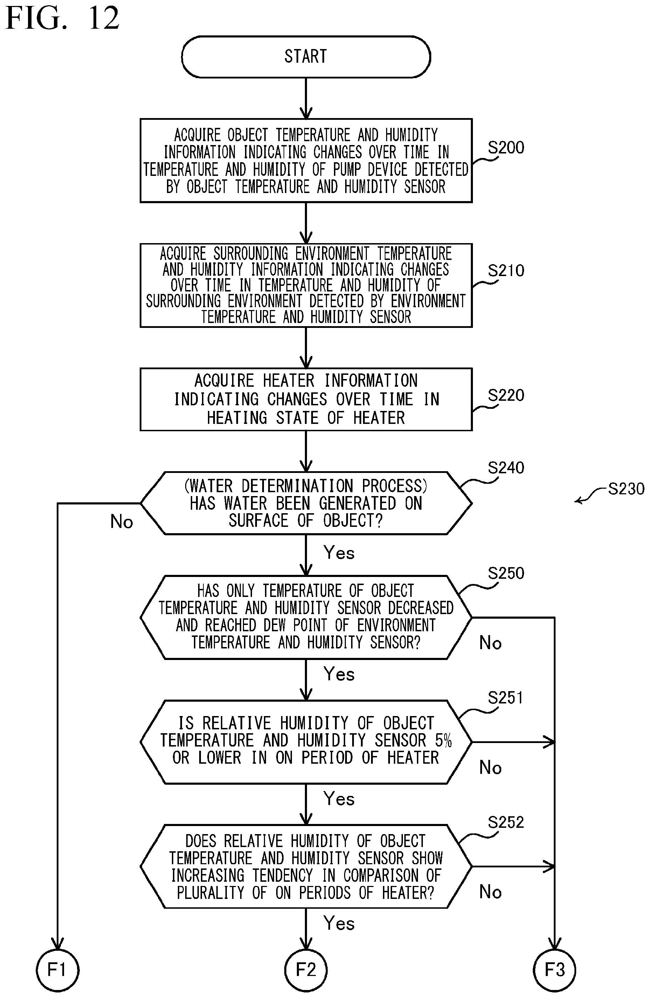

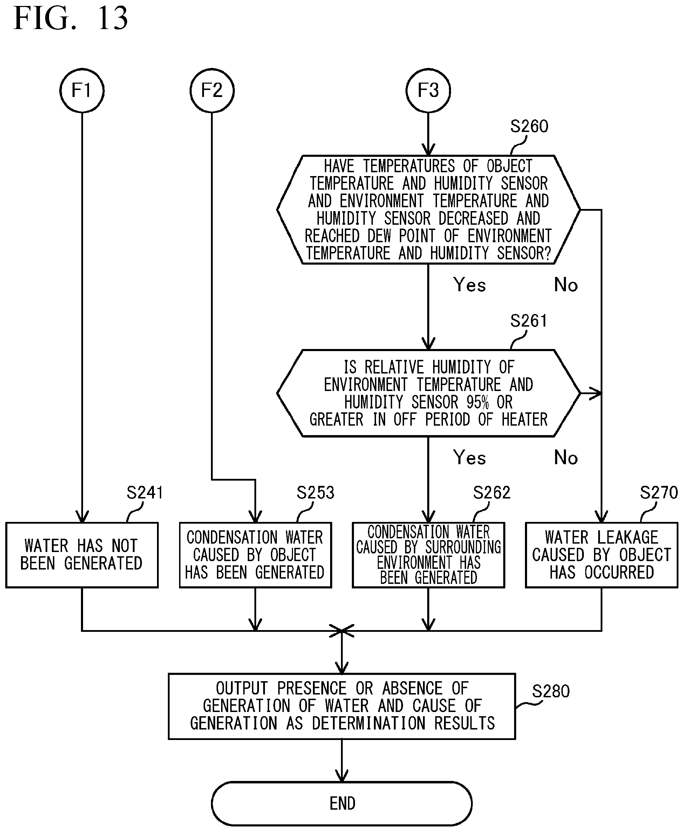

FIGS. 12 and 13 are flowcharts showing an example of the operation of the water detecting device 3B according to the third embodiment. A series of processes shown in FIGS. 12 and 13 may be repeatedly executed at, for example, a predetermined execution cycle, or may be executed based on an execution command from the pump device 2, the management device 4C, or the user terminal device 5.

First, in step S200, the object temperature and humidity information acquisition unit 300 of the water detecting device 3B acquires the object temperature and humidity information from the object temperature and humidity sensor 34. Then, in step S210, the environment temperature and humidity information acquisition unit 301 acquires the environment temperature and humidity information from the environment temperature and humidity sensor 35. Next, in step S220, the heater information acquisition unit 304 acquires the heater information from the object temperature and humidity sensor heater 36 and the environment temperature and humidity sensor heater 37.

Then, in step S230 (specifically, steps S240 to S270), the determination unit 302B determines the presence or absence of water generation and the factor of water generation on the surface of the pump device 2 based on the object temperature and humidity information acquired in step S200, the environment temperature and humidity information acquired in step S210, and the heater information acquired in step S220.

First, in step S240, the determination unit 302B performs the water determination process of determining the presence or absence of water generation on the surface of the pump device 2 based on the object temperature and humidity information and the heater information. Hereinafter, first to third water determination processes performed by the determination unit 302B are described. The determination unit 302B may execute at least one of the first to third water determination processes, or may execute all of the first to third water determination processes.

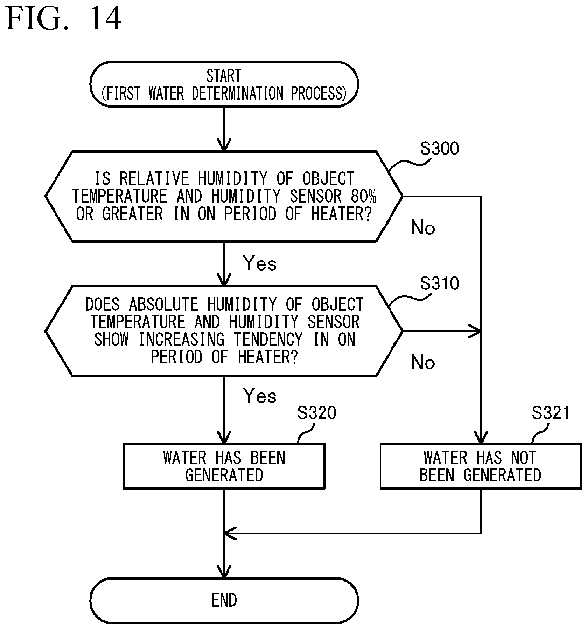

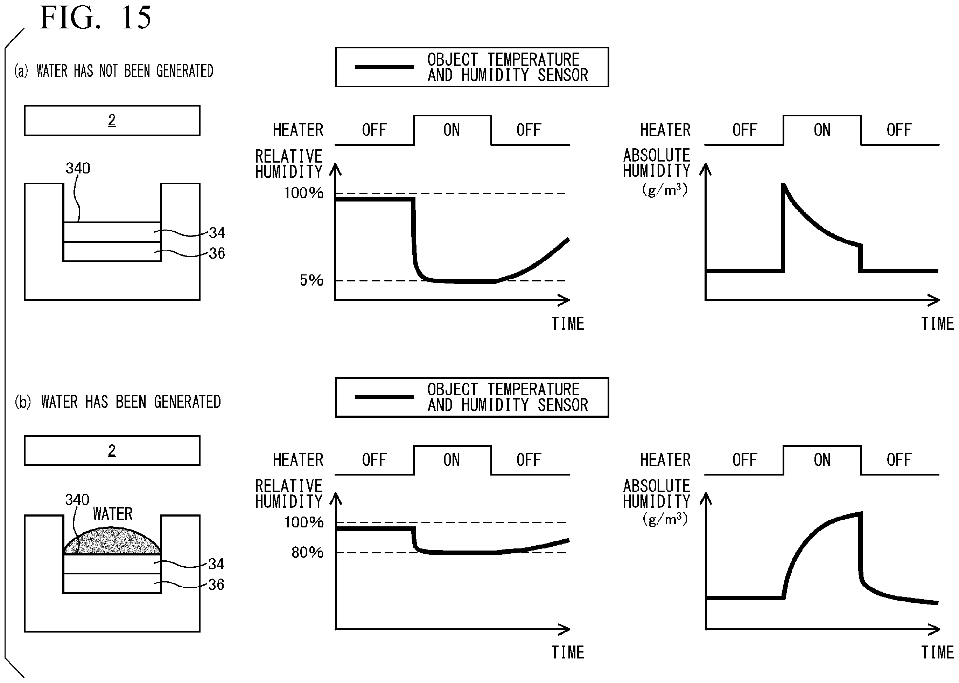

FIG. 14 is a flowchart showing an example of the first water determination process (step S240) by the water detecting device 3B according to the third embodiment. FIG. 15 is a graph showing an example of changes over time in the object temperature and humidity sensor 34 depending on the presence or absence of water generation. In the first water determination process, as shown in FIG. 15, it is determined whether or not water present on the surface of the pump device 2 mainly moves toward an object temperature and humidity sensor 34 side via the water absorbing material 332 and comes into contact with the sensing portion 340.

As the first water determination process, in step S300, the determination unit 302B determines whether or not the relative humidity of the pump device 2 based on the object temperature and humidity information is greater than or equal to a predetermined threshold (for example, 80%) during the on period of the object temperature and humidity sensor heater 36. Then, when it is determined in step S300 that the relative humidity of the pump device 2 is greater than or equal to the predetermined threshold (that is, when "Yes" is determined in step S300), it is determined in step S310 whether or not the absolute humidity of the pump device 2 based on the object temperature and humidity information shows an increasing tendency in the ON period of the object temperature and humidity sensor heater 36. As a result, when it is determined in step S310 that the absolute humidity of the pump device 2 shows an increasing tendency (that is, when "Yes" is determined in step S310), it is considered that the situation is as shown in (b) of FIG. 15, and it is determined in step S320 that water is generated. On the other hand, when it is determined in steps S300 and S310 that water is not generated (that is, when "No" is determined in step S300 or "No" is determined in step S310), it is considered that the situation is as shown in (a) of FIG. 15, and it is determined in step S321 that water is not generated.

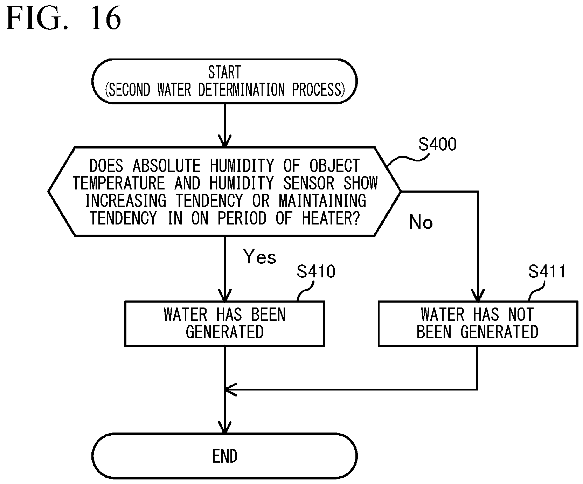

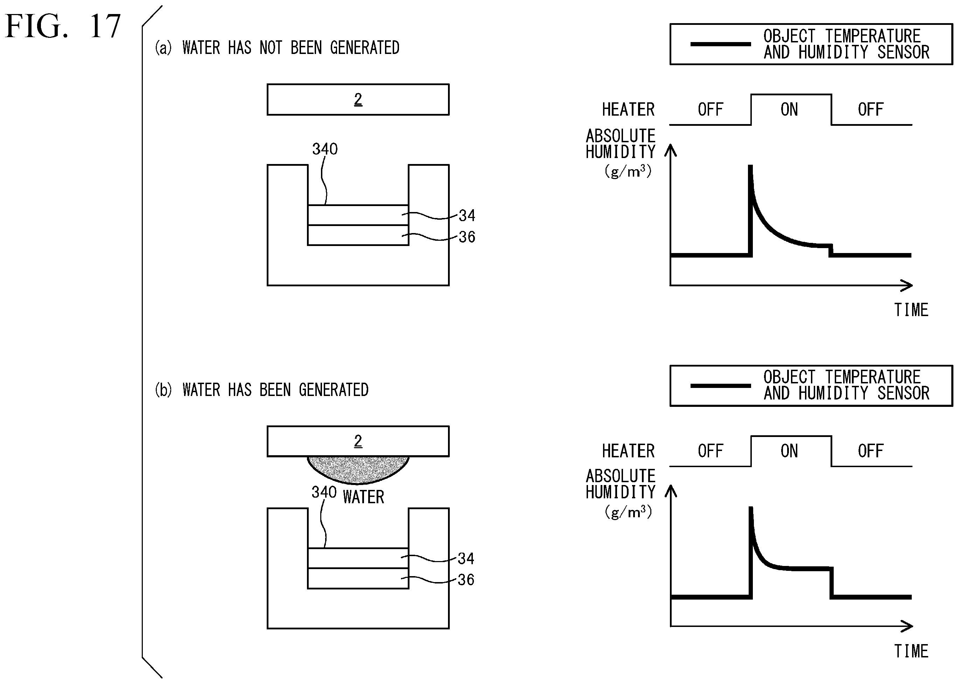

FIG. 16 is a flowchart showing an example of the second water determination process (step S240) by the water detecting device 3B according to the third embodiment. FIG. 17 is a graph showing an example of changes over time in the object temperature and humidity sensor 34 depending on the presence or absence of water generation. In the second water determination process, as shown in FIG. 17, the presence or absence of water that is present on the surface of the pump device 2 before moving toward the object temperature and humidity sensor 34 side via the water absorbing material 332, that is, water that is not in contact with the sensing portion 340 and is present on the surface of the pump unit 20 is determined.

As the second water determination process, in step S400, the determination unit 302B determines whether or not the absolute humidity of the pump device 2 based on the object temperature and humidity information shows an increasing tendency or a maintained tendency during the ON period of the object temperature and humidity sensor heater 36. Then, in a case where it is determined in step S400 that the absolute humidity of the pump device 2 shows an increasing tendency or a maintained tendency (that is, when "Yes" is determined in step S400), it is considered that the situation is as shown in (b) of FIG. 17, and it is determined in step S410 that water is generated. On the other hand, when it is determined in step S400 that the absolute humidity of the pump device 2 does not show an increasing tendency or a maintained tendency (that is, when "No" is determined in step S400), it is considered that the situation is as shown in (a) of FIG. 17, and it is determined in step S411 that water is not generated.

As the third water determination process, the determination unit 302B determines whether or not the relative humidity of the pump device 2 based on the object temperature and humidity information is close to 100% in the same manner as in step S130 of FIG. 5, and determines that water is generated in a case where the relative humidity is close to 100%. In this case, in a case where the relative humidity of the pump device 2 exceeds a predetermined threshold (for example, 95%), it may be determined that water is generated. In a case where a duration time during which the relative humidity of the pump device 2 exceeds a predetermined threshold (for example, 90%) exceeds a predetermined time threshold, it is considered that the relative humidity of the pump device 2 is close to 100%, and it may be determined that water is generated.

Next, when the determination unit 302B determines through the water determination process in step S240 that water is generated (that is, when "Yes" is determined in step S240), the determination unit 302B performs the first condensation determination process of determining the presence or absence of condensation water generation due to the pump device 2 based on the object temperature and humidity information, the environment temperature and humidity information, and the heater information in steps S250 to S252.

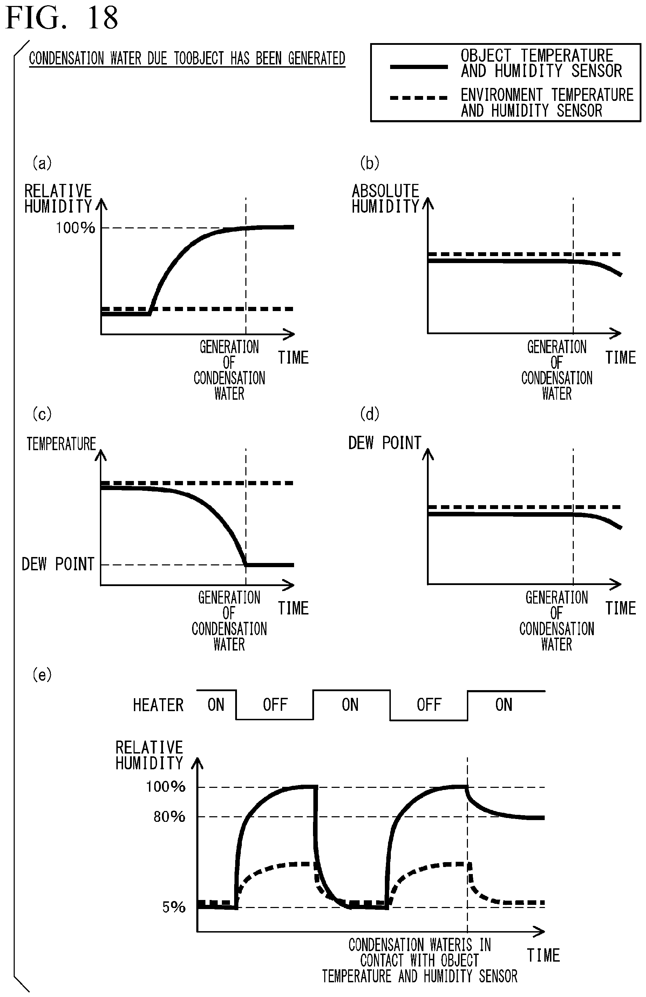

FIG. 18 is a graph showing an example of changes over time in the object temperature and humidity sensor 34 and the environment temperature and humidity sensor 35 when condensation water due to the object is generated. In the first condensation determination process, it is determined that condensation water due to the pump device 2 is generated by detecting the situation shown in FIG. 18.

In step S250, the determination unit 302B determines whether or not only the temperature of the pump device 2 based on the object temperature and humidity information has gradually decreased and reaches the dew point of the surrounding environment based on the environment temperature and humidity information. That is, in step S250, it is determined whether or not the situation is as shown in (c) of FIG. 18. The dew point of the surrounding environment may be calculated from, for example, the temperature and the relative humidity detected by the environment temperature and humidity sensor 35, or may be calculated from the absolute humidity detected by the environment temperature and humidity sensor 35.

Next, in step S251, the determination unit 302B determines, when the ON and OFF operations of the object temperature and humidity sensor heater 36 and the environment temperature and humidity sensor heater 37 are repeatedly performed, whether or not the relative humidity of the pump device 2 based on the object temperature and humidity information is less than or equal to a predetermined lower limit threshold (for example, 5%) for a predetermined number of repetitions (for example, six times) in the ON period of the object temperature and humidity sensor heater 36. Then, when it is determined in step S251 that a relative humidity of the object temperature and humidity sensor 34 is less than or equal to the predetermined lower limit threshold (that is, when "Yes" is determined in step S251), the determination unit 302B determines in step S252 whether or not the relative humidity of the pump device 2 based on the object temperature and humidity information shows an increasing tendency for a predetermined number of repetitions (for example, six times) in a comparison of a plurality of ON periods of the object temperature and humidity sensor heater 36. That is, in steps S251 and S252, it is determined whether or not the situation is shown in (e) of FIG. 18.

When the object temperature and humidity sensor heater 36 and the environment temperature and humidity sensor heater 37 are turned ON in a state where the amount of condensation water due to the pump device 2 is small (that is, a state where condensation water is generated but is not in contact with the sensing portion 340 of the object temperature and humidity sensor 34), both the relative humidities of the object temperature and humidity sensor 34 and a relative humidity of the environment temperature and humidity sensor 35 decrease to the lower limit threshold (for example, 5%) or lower, and there is no difference in the change. Thereafter, when the object temperature and humidity sensor heater 36 and the environment temperature and humidity sensor heater 37 are turned ON in a state where condensation water is in contact with the sensing portion 340 of the object temperature and humidity sensor 34 via the water absorbing material 332 due to accumulation of the condensation water, the relative humidity of the environment temperature and humidity sensor 35 decreases to the lower limit threshold. However, the relative humidity of the object temperature and humidity sensor 34 does not decrease to the lower limit threshold but remains at a relative humidity as high as about an upper limit threshold (for example, 80%) when the plurality of ON periods are compared. In steps S251 and S252, such behavior may be detected, and a determination method other than the above may be used.

Then, the determination unit 302B performs the water generation factor process based on determination results of steps S250 to S252. That is, when it is determined through the first condensation determination process of steps S250 to S252 that condensation water due to the pump device 2 is generated (that is, in a case where "Yes" is determined in all of steps S250 to S252), it is determined in step S253 that the factor of water generation on the surface of the pump device 2 is condensation water caused by the pump device 2.

On the other hand, when the determination unit 302B determines through the first condensation determination process of steps S250 to S252 that condensation water due to the pump device 2 is not generated (that is, when "No" is determined in any of steps S250 to S252), the determination unit 302B performs the second condensation determination process of determining the presence or absence of condensation water generation due to the surrounding environment based on the object temperature and humidity information, the environment temperature and humidity information, and the heater information in steps S260 and S261.

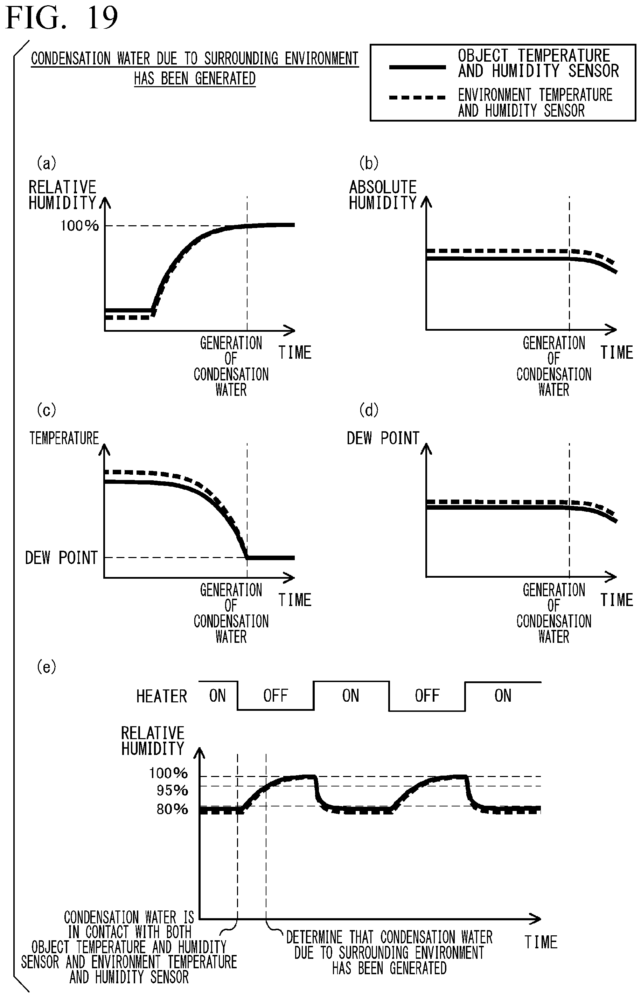

FIG. 19 is a graph showing an example of changes over time in the object temperature and humidity sensor 34 and the environment temperature and humidity sensor 35 when condensation water due to the surrounding environment is generated. In the second condensation determination process, it is determined that condensation water due to the surrounding environment is generated, by detecting the situation shown in FIG. 19.

In step S260, the determination unit 302B determines whether or not the temperature of the pump device 2 based on the object temperature and humidity information and the temperature of the surrounding environment based on the environment temperature and humidity information have gradually decreased and reached the dew point of the surrounding environment based on the environment temperature and humidity information. That is, in step S260, it is determined whether or not the situation is as shown in (c) of FIG. 19. The dew point of the surrounding environment may be calculated from, for example, the temperature and the relative humidity detected by the environment temperature and humidity sensor 35, or may be calculated from the absolute humidity detected by the environment temperature and humidity sensor 35.

Next, in step S261, the determination unit 302B determines, when the ON and OFF operations of the object temperature and humidity sensor heater 36 and the environment temperature and humidity sensor heater 37 are repeatedly performed, whether or not the relative humidity of the surrounding environment based on the environment temperature and humidity information is greater than or equal to a predetermined upper limit threshold (for example, 95%) in the OFF period of the object temperature and humidity sensor heater 36. That is, in step S261, it is determined whether or not the situation is as shown in (e) of FIG. 19.

When the object temperature and humidity sensor heater 36 and the environment temperature and humidity sensor heater 37 are turned ON in a state where condensation water due to the surrounding environment is generated, the relative humidities of both the object temperature and humidity sensor 34 and the environment temperature and humidity sensor 35 decrease to a lower limit threshold (for example, 80%) or lower, and there is no difference in the change. Thereafter, when the object temperature and humidity sensor heater 36 and the environment temperature and humidity sensor heater 37 are turned OFF, the relative humidities of the object temperature and humidity sensor 34 and the environment temperature and humidity sensor 35 increase to an upper limit threshold (for example, 95%) due to the presence of the condensation water. In step S261, such behavior may be detected, and a determination method other than the above may be used.

Then, the determination unit 302B performs the water generation factor process based on determination results in steps S260 and S261. That is, when it is determined through the second condensation determination process in steps S260 and S261 that condensation water due to the surrounding environment is generated (that is, when "Yes" is determined in both steps S260 and S261), it is determined in step S262 that the factor of water generation on the surface of the pump device 2 is condensation water caused by the surrounding environment.

On the other hand, when the determination unit 302B determines through the second condensation determination process in steps S260 and S261 that condensation water due to the surrounding environment is not generated (that is, when "No" is determined in any of steps S260 and S261), the determination unit 302B determines in step S270 that the factor of water generation on the surface of the pump device 2 is water leakage caused by the pump device 2.

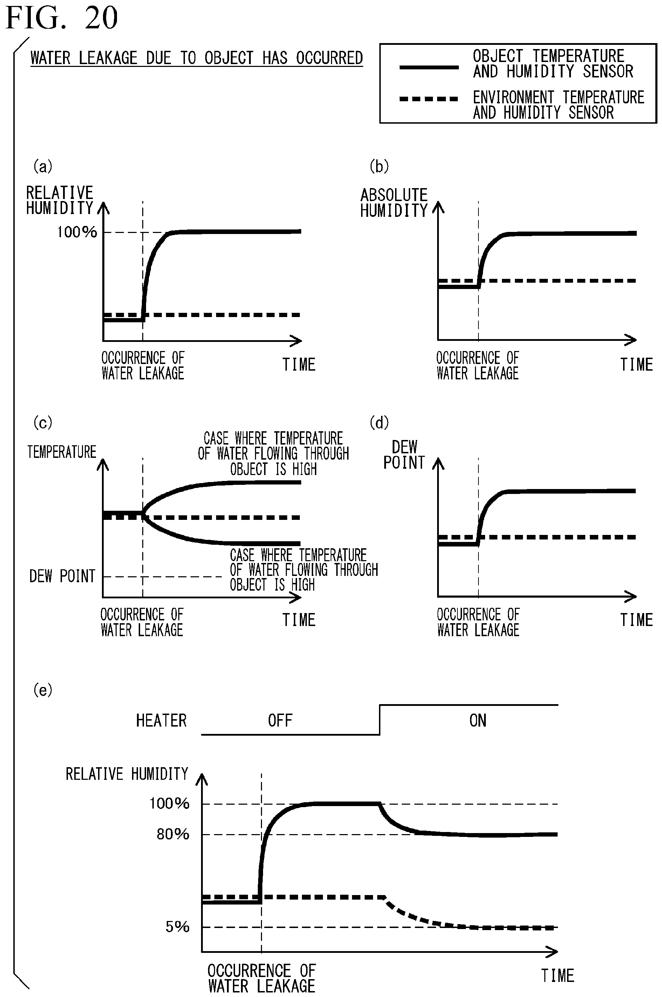

FIG. 20 is a graph showing an example of changes over time in the object temperature and humidity sensor 34 and the environment temperature and humidity sensor 35 when water leakage due to the object has occurred. In the present embodiment, it is described that when the determination unit 302B determines through the water determination process that water is generated (when "Yes" is determined in step S240) and determines through the first and second condensation determination processes that the cause of water generation is not condensation water (that is, when "No" is determined in any of steps S250 to S252 and "No" is determined in any of steps S260 and S261), it is determined that the cause of water generation is water leakage caused by the pump device 2. However, the determination unit 302B may further perform a water leakage determination process of determining the presence or absence of occurrence of water leakage due to the object based on the object temperature and humidity information, the environment temperature and humidity information, and the heater information.

As the water leakage determination process, for example, the determination unit 302B determines, when the ON and OFF operations of the object temperature and humidity sensor heater 36 and the environment temperature and humidity sensor heater 37 are repeatedly performed, whether or not the relative humidity of the pump device 2 based on the object temperature and humidity information is greater than or equal to a predetermined first threshold (for example, 80%) in the ON period of the object temperature and humidity sensor heater 36, and whether or not the relative humidity of the surrounding environment based on the environment temperature and humidity information is less than or equal to a second threshold (for example, 5%) set to be lower than the first threshold in the ON period of the environment temperature and humidity sensor heater 37. Then, when the relative humidity of the pump device 2 is greater than or equal to the first threshold (for example, 80%) and the relative humidity of the surrounding environment is less than or equal to the second threshold (for example, 5%), the determination unit 302B determines that water leakage due to the object has occurred. In addition, in the water leakage determination process, behavior as shown in FIG. 20 may be detected, and a determination method other than the above may be used.

Returning to FIG. 12, when it is determined through the water determination process in step S240 that water is not generated (that is, when "No" is determined in step S240), the determination unit 302B determines that water is not generated in step S241.

Then, in step S280, the output processing unit 303 outputs a determination result (specifically, determination results of steps S241, S253, S262, and S270) by the determination unit 302B in step S230, and the series of processes is ended. It should be noted that step S200 corresponds to the object temperature and humidity information acquisition step, step S210 corresponds to the environment temperature and humidity information acquisition step, step S220 corresponds to a heater information acquisition step, step S230 corresponds to the determination step, and step S280 corresponds to the output processing step.

As described above, with the water detecting device 3B according to the present embodiment, it is possible to determine the presence or absence of water generation and the factor of water generation on the surface of the object (pump device 2) by combining the object temperature and humidity information indicating the changes over time in the temperature and humidity of the pump device 2, the environment temperature and humidity information indicating the changes over time in the temperature and humidity of the surrounding environment, and the heater information indicating the changes over time in the heating states of the object temperature and humidity sensor heater 36 and the environment temperature and humidity sensor heater 37.

Then, when the determination unit 302B determines that water is generated on the surface of the object, the determination unit 302B can determine whether the factor of water generation is condensation water or water leakage. Therefore, it is possible to appropriately detect, for example, mechanical leakage due to damage or aging deterioration of the object without using an expensive water leakage sensor such as an electrode type or infrared type water leakage sensor.

### (Fourth Embodiment)

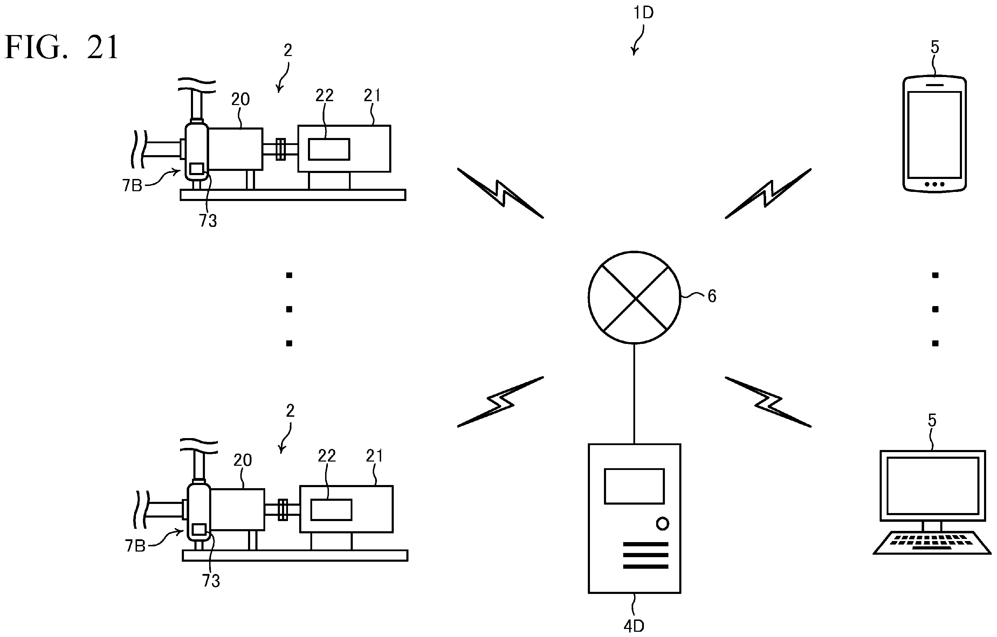

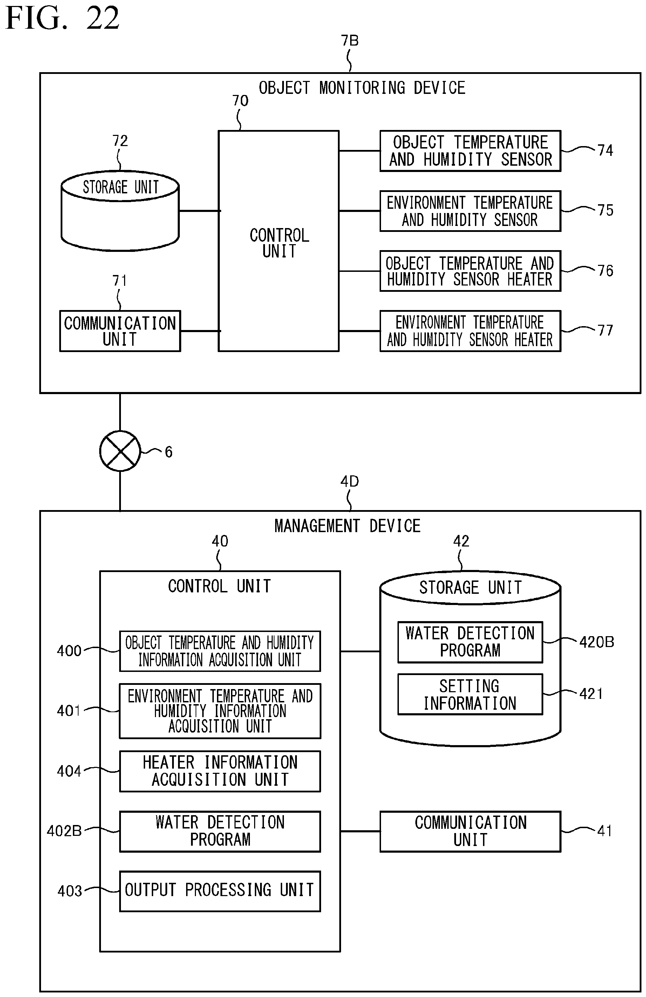

FIG. 21 is an overall configuration diagram showing an example of a water detecting system 1D according to a fourth embodiment. FIG. 22 is a block diagram showing an example of an object monitoring device 7B and a management device 4D according to a fourth embodiment.

The water detecting system 1D according to the present embodiment is different from the third embodiment in that the water detecting system 1D includes the object monitoring device 7B attached to the pump device 2 instead of the water detecting device 3B, and the management device 4D implements functions of the water detecting method performed by the control unit 30 of the water detecting device 3B. A basic configuration and operation are common to the third embodiment. Hereinafter, feature parts of the present embodiment are mainly described.

The object monitoring device 7B is a device in which the object temperature and humidity information acquisition unit 300, the environment temperature and humidity information acquisition unit 301, the heater information acquisition unit 304, the determination unit 302B, and the output processing unit 303 are omitted from the water detecting device 3B according to the third embodiment. That is, the object monitoring device 7B includes the control unit 70, the communication unit 71, the storage unit 72, the housing 73, the object temperature and humidity sensor 74, the environment temperature and humidity sensor 75, an object temperature and humidity sensor heater 76, and an environment temperature and humidity sensor heater 77. The control unit 70, the communication unit 71, and the storage unit 72 may be omitted as appropriate. In that case, the object temperature and humidity sensor 74, the environment temperature and humidity sensor 75, the object temperature and humidity sensor heater 76, and the environment temperature and humidity sensor heater 77 may be connected to, for example, the pump control panel 22 of the pump device 2.

The object temperature and humidity sensor heater 76 and the environment temperature and humidity sensor heater 77 perform ON and OFF operations of a heating state based on, for example, operation command data received from the management device 4D via the control unit 70 and the communication unit 71. A transmission cycle of sensor data may be the same as the detection cycle of the object temperature and humidity sensor 74 and the environment temperature and humidity sensor 75. In addition, the transmission cycle of the sensor data may be longer than the detection cycle of the object temperature and humidity sensor 74 and the environment temperature and humidity sensor 75. In this case, the communication unit 71 may collectively transmit the sensor data accumulated during the transmission cycle.

The management device 4D includes, as main components thereof, the control unit 40, the communication unit 41, and the storage unit 42. The control unit 40 functions as the object temperature and humidity information acquisition unit 400, the environment temperature and humidity information acquisition unit 401, a heater information acquisition unit 404, a determination unit 402B, and the output processing unit 403 by executing, for example, a water detection program 420B stored in the storage unit 42. Since the object temperature and humidity information acquisition unit 400, the environment temperature and humidity information acquisition unit 401, the heater information acquisition unit 404, the determination unit 402B, and the output processing unit 403 implement the same functions as the object temperature and humidity information acquisition unit 300, the environment temperature and humidity information acquisition unit 301, the heater information acquisition unit 304, the determination unit 302B, and the output processing unit 303 according to the third embodiment, detailed descriptions thereof are omitted.

As described above, with the management device 4D according to the present embodiment, it is possible to determine the presence or absence of water generation and the factor of water generation on the surface of the object (pump device 2) by combining the object temperature and humidity information indicating the changes over time in the temperature and humidity of the pump device 2, the environment temperature and humidity information indicating the changes over time in the temperature and humidity of the surrounding environment, and the heater information indicating the changes over time in the heating states of the object temperature and humidity sensor heater 76 and the environment temperature and humidity sensor heater 77.

Then, when the determination unit 402B determines that water is generated on the surface of the object, the determination unit 402B can determine whether the factor of water generation is condensation water or water leakage. Therefore, it is possible to appropriately detect, for example, mechanical leakage due to damage or aging deterioration of the object without using an expensive water leakage sensor such as an electrode type or infrared type water leakage sensor.

### (Other Embodiments)

The present invention is not limited to the above-described embodiments, and may be implemented with various modifications without departing from the intent of the present invention. All such modifications are included in the technical scope of the present invention.

In the above-described embodiments, a case where the water detecting devices 3A and 3B are implemented by the device including the control unit 30, the communication unit 31, and the storage unit 32 is described, but some or all of the functions (particularly, the function of the control unit 30) of the water detecting devices 3A and 3B may be implemented by the pump control panel 22 of the pump device 2 or the user terminal device 5. For example, the functions may be implemented by a remote device such as a server type, a cloud type, or a central monitoring center type device. In this case, the object temperature and humidity sensor 34 and the environment temperature and humidity sensor 35 may be connected to the pump control panel 22, the user terminal device 5, or the remote device by wire or wirelessly to transmit and receive various data. In addition, in the above-described embodiments, a case where the object monitoring devices 7A and 7B are implemented by the device including the control unit 70, the communication unit 71, and the storage unit 72 is described, but some or all of the functions (particularly, the function of the control unit 70) of the object monitoring devices 7A and 7B may be implemented by the pump control panel 22 of the pump device 2 or the user terminal device 5. For example, the functions may be implemented by a remote device such as a server type, a cloud type, or a central monitoring center type device. In this case, the object temperature and humidity sensor 34 and the environment temperature and humidity sensor 35 may be connected to the pump control panel 22, the user terminal device 5, or the remote device by wire or wirelessly to transmit and receive various data.

In the above-described embodiments, a case where the water detecting systems 1A to 1D include the user terminal device 5 as one of the components is described, but the water detecting systems 1A to 1D may include a remote device such as a server type, a cloud type, or a central monitoring center type device instead of or in addition to the user terminal device 5. In that case, the remote device may operate in the same manner as the user terminal device 5 according to the above-described embodiments, and may further transmit and receive various data to and from a client type device that may be connected to the remote device.

In the above-described embodiments, a case where the water detecting devices 3A and 3B and the management devices 4B and 4D operate according to the flowcharts shown in FIGS. 5, 12, 13, 14, and 16 is described, but an execution order of each step may be appropriately changed, or some steps may be omitted.

Although the water detecting device 3A and the management device 4B according to the above-described embodiment have been described as executing the water detecting method of determining the presence or absence of water generation and the cause of water generation based on the object temperature and humidity information and the environment temperature and humidity information, the water detecting method may be executed using a learning model based on machine learning. In addition, although the water detecting device 3B and the management device 4D according to the above-described embodiment have been described as executing the water detecting method of determining the presence or absence of water generation and the cause of water generation based on the object temperature and humidity information, the environment temperature and humidity information, and the heater information, the water detecting method may be executed using a learning model based on machine learning. In this case, the learning model is obtained by training a correlation between input data and output data through machine learning, for example, by using the object temperature and humidity information and the environment temperature and humidity information, or the object temperature and humidity information, the environment temperature and humidity information, and the heater information as the input data, and using the presence or absence of water generation and the cause of generation as the output data. The machine learning mentioned here is a method called supervised learning, and any machine learning method such as a neural network (including deep learning), a decision tree, ensemble learning, clustering, multivariate analysis, or a support vector machine may be adopted.

### Reference Signs List

1A To 1D Water Detecting System, 2 Pump Device (Object), 3A, 3A Water Detecting Device, 4A To 4D Management Device, 5 User Terminal Device, 6 Network, 7A, 7B Object Monitoring Device, 20 Pump Unit, 21 Motor, 22 Pump Control Panel, 30 Control Unit, 31 Communication Unit, 32 Storage Unit, 33 Housing, 34 Object Temperature and Humidity Sensor, 35 Environment Temperature and Humidity Sensor, 36 Object Temperature and Humidity Sensor Heater, 37 Environment Temperature and Humidity Sensor Heater, 40 Control Unit, 41 Communication Unit, 42 Storage Unit, 70 Control Unit, 71 Communication Unit, 72 Storage Unit, 73 Housing, 74 Object Temperature and Humidity Sensor, 75 Environment Temperature and Humidity Sensor, 76 Object Temperature and Humidity Sensor Heater, 77 Environment Temperature and Humidity Sensor Heater, 300 Object Temperature and Humidity Information Acquisition Unit, 301 Environment Temperature and Humidity Information Acquisition Unit, 302A, 302B Determination Unit, 303 Output Processing Unit, 304 Heater Information Acquisition Unit, 320A, 320B Water Detection Program, 400 Object Temperature and Humidity Information Acquisition Unit, 401 Environment Temperature and Humidity Information Acquisition Unit, 402A, 402B Determination Unit, 403 Output Processing Unit, 404 Heater Information Acquisition Unit, 420A, 420B Water Detection Program

## Claims

1. A water detecting device that detects a water generation situation present on a surface of an object installed in a surrounding environment and through which water flows, the device comprising:
an object temperature and humidity sensor that detects a temperature and a humidity of the object;
an environment temperature and humidity sensor that detects a temperature and a humidity of the surrounding environment; and
a determination unit that determines presence or absence of water generation and a factor of the water generation based on object temperature and humidity information indicating changes over time in the temperature and humidity detected by the object temperature and humidity sensor, and environment temperature and humidity information indicating changes over time in the temperature and humidity detected by the environment temperature and humidity sensor.

2. The water detecting device according to Claim 1, further comprising:
a housing that internally stores the environment temperature and humidity sensor and
the object temperature and humidity sensor, wherein
the object temperature and humidity sensor is disposed on a side of the housing that faces the object, and
the environment temperature and humidity sensor is disposed on a side of the housing opposite to the object.

3. The water detecting device according to Claim 1, wherein
the determination unit is configured to perform
a water determination process of determining the presence or absence of the water generation based on the object temperature and humidity information,
a condensation determination process of determining presence or absence of condensation water generation due to the surrounding environment, based on the environment temperature and humidity information, and
a water generation factor process of determining, when it is determined through the water determination process that the water generation exists, whether the factor of the water generation is the condensation water caused by the object or the condensation water caused by the surrounding environment based on a determination result obtained by determining the presence or absence of generation of the condensation water through the condensation determination process.

4. The water detecting device according to any one of claims 1 to 3, further comprising:
an object temperature and humidity sensor heater disposed to heat at least one of a sensing portion of the object temperature and humidity sensor, or the surface of the object; and
an environment temperature and humidity sensor heater disposed to heat a sensing portion of the environment temperature and humidity sensor,
wherein the determination unit is configured to determine the presence or absence of the water generation and the factor of the water generation, based on the object temperature and humidity information, the environment temperature and humidity information, and heater information indicating changes over time in heating states of the object temperature and humidity sensor heater and the environment temperature and humidity sensor heater.

5. The water detecting device according to Claim 4,
wherein the determination unit is configured to perform
a water determination process of determining the presence or absence of the water generation based on the object temperature and humidity information and the heater information,
a first condensation determination process of determining presence or absence of the condensation water generation due to the object based on the object temperature and humidity information, the environment temperature and humidity information, and the heater information,
a second condensation determination process of determining presence or absence of the condensation water generation due to the surrounding environment based on the object temperature and humidity information, the environment temperature and humidity information, and the heater information, and
a water generation factor process of determining, when it is determined through the water determination process that the water generation exists, whether the factor of the water generation is water leakage caused by the object, the condensation water caused by the object, or the condensation water caused by the surrounding environment based on a determination result obtained by determining the presence or absence of the condensation water generation through the first condensation determination process, and a determination result obtained by determining the presence or absence of the condensation water generation through the second condensation determination process.

6. The water detecting device according to claim 5, wherein
the determination unit is configured to, as the water determination process,
determine that the water generation exists, in a case where ON and OFF operations of the object temperature and humidity sensor heater and the environment temperature and humidity sensor heater are repeatedly performed, when a relative humidity of the object based on the object temperature and humidity information is greater than or equal to a predetermined threshold during an ON period of the object temperature and humidity sensor heater based on the heater information, and an absolute humidity of the object based on the object temperature and humidity information shows an increasing tendency, or
determine that the water generation exists, when the absolute humidity of the object based on the object temperature and humidity information during the ON period shows an increasing tendency, or a maintained tendency.

7. The water detecting device according to claim 5, wherein
the determination unit is configured to,
as the first condensation determination process, determine that the condensation water generation due to the object exists, in a case where only the temperature of the object based on the object temperature and humidity information reaches a dew point of the surrounding environment indicated by the environment temperature and humidity information, and ON and OFF operations of the object temperature and humidity sensor heater and the environment temperature and humidity sensor heater are repeatedly performed, when a relative humidity of the object based on the object temperature and humidity information is less than or equal to a predetermined lower limit threshold during an ON period of the object temperature and humidity sensor heater based on the heater information, and a relative humidity of the object based on the object temperature and humidity information shows an increasing tendency when compared to a plurality of the ON periods, and
as the second condensation determination process, determine that the condensation water generation due to the surrounding environment exists, in a case where the temperature of the object based on the object temperature and humidity information and the temperature of the surrounding environment based on the environment temperature and humidity information reach the dew point of the surrounding environment indicated by the environment temperature and humidity information, and the ON and OFF operations of the object temperature and humidity sensor heater and the environment temperature and humidity sensor heater are repeatedly performed, when a relative humidity of the surrounding environment based on the environment temperature and humidity information is greater than or equal to a predetermined upper limit threshold during an OFF period of the environment temperature and humidity sensor heater based on the heater information.

8. The water detecting device according to claim 5, wherein
the determination unit is configured to
further perform a water leakage determination process of determining, in a case where ON and OFF operations of the object temperature and humidity sensor heater and the environment temperature and humidity sensor heater are repeatedly performed, when a relative humidity of the object based on the object temperature and humidity information is greater than or equal to a predetermined first threshold during an ON period of the object temperature and humidity sensor heater based on the heater information and a relative humidity of the surrounding environment based on the environment temperature and humidity information is less than or equal to a second threshold set to be lower than the first threshold during an ON period of the environment temperature and humidity sensor heater based on the heater information, that water leakage due to the surrounding environment has occurred, and
as the water generation factor process, when it is determined through the water determination process that the water generation exists, determine whether the factor of the water generation is the water leakage caused by the object, the condensation water caused by the object, or the condensation water caused by the surrounding environment based on the determination result obtained by determining the presence or absence of condensation water generation through the first condensation determination process, the determination result obtained by determining the presence or absence of the condensation water generation through the second condensation determination process, and a determination result obtained by determining presence or absence of occurrence of the water leakage through the water leakage determination process.

9. A water detecting system that detects a water generation situation present on a surface of an object, which is installed in a surrounding environment and through which water flows, the system comprising:
one or a plurality of object monitoring devices including an object temperature and humidity sensor configured to detect a temperature and a humidity of the object and an environment temperature and humidity sensor configured to detect a temperature and a humidity of the surrounding environment; and
a management device configured to communicate with the object monitoring device,
wherein the management device includes a determination unit configured to determine presence or absence of water generation and a factor of the water generation based on object temperature and humidity information indicating changes over time in the temperature and humidity detected by the object temperature and humidity sensor and environment temperature and humidity information indicating changes over time in the temperature and humidity detected by the environment temperature and humidity sensor.

10. The water detecting system according to claim 9, wherein
the object monitoring device further comprises:
an object temperature and humidity sensor heater disposed to heat at least one of a sensing portion of the object temperature and humidity sensor or the surface of the object; and
an environment temperature and humidity sensor heater disposed to heat a sensing portion of the environment temperature and humidity sensor; wherein
the determination unit is configured to determine the presence or absence of water generation and the factor of the water generation based on the object temperature and humidity information, the environment temperature and humidity information, and heater information indicating changes over time in heating states of the object temperature and humidity sensor heater and the environment temperature and humidity sensor heater.

11. A water detecting method for detecting a water generation situation present on a surface of an object, which is installed in a surrounding environment and through which water flows, the method comprising:
an object temperature and humidity information acquisition step of acquiring object temperature and humidity information indicating changes over time in a temperature and a humidity of the object detected by an object temperature and humidity sensor;
an environment temperature and humidity information acquisition step of acquiring environment temperature and humidity information indicating changes over time in a temperature and a humidity of the surrounding environment detected by an environment temperature and humidity sensor; and
a determination step of determining presence or absence of water generation and a factor of the water generation based on the object temperature and humidity information and the environment temperature and humidity information.

12. The water detecting method according to claim 11, further comprising:
a heater information acquisition step of acquiring heater information indicating changes over time in a heating state of an object temperature and humidity sensor heater disposed to heat at least one of a sensing portion of the object temperature and humidity sensor or the surface of the object and a heating state of an environment temperature and humidity sensor heater disposed to heat a sensing portion of the environment temperature and humidity sensor, wherein
in the determination step, the presence or absence of the water generation and the factor of the water generation are determined based on the object temperature and humidity information, the environment temperature and humidity information, and the heater information.
